# EUROPÄISCHE PATENTSCHRIFT

(11) **EP 0 672 698 B1**
(45) Veröffentlichungstag und Bekanntmachung des Hinweises auf die Patenterteilung: **13.01.1999**
(21) Anmeldenummer: 95103164.0
(22) Anmeldetag: 06.03.1995
(51) Int. Cl.: C08G 18/38, C08G 18/36

(54) **Verfahren zur Herstellung von gegebenenfalls zellförmigen Polyurethanen und/oder Polyurethanharnstoffen**
Process for the preparation of optionally cellular polyurethanes and/or polyurethanecureas
Procédé de préparation de polyuréthanes et/ou polyuréthaneurées éventuellement cellulaires

(30) Priorität: 17.03.1994 DE 4409042
(43) Veröffentlichungstag der Anmeldung: 20.09.1995
(73) Patentinhaber: BAYER AG, 51368 Leverkusen (DE)
(72) Erfinder: von Bonin, Wulf, Dr., D-51519 Odenthal (DE); Müller, Hanns-Peter, Dr., D-51519 Odenthal (DE); Kapps, Manfred, Dr., D-51467 Bergisch Gladbach (DE)

(56) Entgegenhaltungen:
- EP-A- 0 086 893
- DE-A- 1 802 503
- DE-A- 2 435 644
- US-A- 4 246 364

## Beschreibung

Im Rahmen der landwirtschaftlichen und umweltpolitischen Situation in den sogen. westlichen Ländern, besteht ein zunehmendes Interesse an der Verwendung natürlicher, z.B. nachwachsender Rohstoffe für industrielle Zwecke, also auch für Zwecke der Polyurethanchemie.

Wie die EP-A 0 563 682 (S. 2; Z. 20) im Zusammenhang mit Weichschäumen beschreibt, ist der Einsatz von Fetten und Ölen als Weichmacher in Schaumstoffen grundsätzlich bekannt.

So beschreibt schon DE-PS 1 113 810 die Kombination von Rizinusöl und basischen Polyolen bei der Herstellung von Polyurethanschaumstoffen. Hierbei fungiert das Rinzinusöl als eine Polyhydroxylverbindung und wird chemisch in das PU-Gerüst eingebaut (wie auch die mitzuverwendenden Polyole), d.h. ein Teil der Polyolkomponenten der Schaumstoffrezeptur wird durch das natürliche Ö1 substituiert.

Im vergleichbarem Sinne beschreibt die US-PS 2 955 091 Polyurethan-Schaumstoffe auf Basis einer Kombination aus Fettsäureglyceriden mit OH-Zahlen nicht unter 100, wobei Castoröl genannt wird, und Propylenglykolpolyethern mit Molekulargewichten um 1000.

Gemäß EP-A 0 563 682 wird Speisemargarine in Kombination mit Polyetherpolyolen, deren OH-Zahlen zwischen 14 und 50 liegen. zur Tixotropierung und zusätzlichen Aktivierung von Weichschaum-Reaktionsgemischen verwendet, wobei die durch langkettige Polyether ausgezeichneten Reaktionsgemische bis zu 3() Gew.-% der Margarine enthalten können, ohne daß eine Verschlechterung der Schaumstoffeigenschaften beobachtet wird. Wahrscheinlich besteht eine recht gute Verträglichkeit der Margarinefette mit den langen, relativ hydrophoben Polypropylenetherketten der Weichschaumpolyole, so daß keine Verschlechterung der Produkteigenschaften resultiert.

Es ist andererseits aus der DE-OS 4 303 556 auch bekannt, PU-Schaumstoffe aus Gemischen von hydroxylierten Estern natürlicher Fettsäuren und hydroxylierten, bzw. funktionalisierten oligomeren Kohlenwasserstoffen herzustellen, und aus der DE-OS 4 315 841 sind analoge Schaumstoffe bekannt, bei denen anstelle der funktionalisierten Kohlenwasserstoffe auch nicht funktionalisierte Polyolefine eingesetzt werden können. In diesem letzteren Falle fungieren die hydroxylierten Fettsäureester als verträglich machender "Emulgator" für die Polyolefine.

In beiden Fällen jedoch ist die Mitverwendung erheblicher Anteile der nur chemisch aufwendig herzustellenden funktionalisierten Fettsäureester erforderlich.

Die Herstellung solcher funktionalisierter Fettsäureester ist z.B. in der EP-A-0 544 590 oder in Fat. Sci. Technol. Bd. 95, Nr. 3; S. 91 ff. beschrieben.

Es wurde nach einem Verfahren gesucht, bei dem auch nichtfunktionelle, bzw. nicht funktionalisierte Fettsäureester und Kohlenwasserstoffe bzw. Polyolefinoligomere, insbesonders auch nichtfunktionelle natürliche, nachwachsende Öle, wie sie direkt aus den Ölfrüchten extrahierbar sind, ohne Zuhilfenahme der speziell, z.B. gemäß der obig zitierten Beschreibungen, funktionalisierten Fettsäureester oder OH-funktioneller, zumeist teurer natürlicher Öle, wie Rizinusöl, zu PU-Schaumstoffen verarbeitet werden können.

Alternativ wurden gegenüber dem Stand der Technik erheblich vereinfachte Verfahren gesucht, die gestatten. natürliche Fettsäureester zur Herstellung von z.B. Schaumstoffen brauchbar zu machen.

Aus der DE-A 1 802 503 und der US-A 4 246 364 sind PU-Schäume, hergestellt durch Umsetzung von Polyisocyanaten mit Reaktionsprodukten von Alkanolaminen mit Ölen und Fetten bereits bekannt.

Es wurde nunmehr überraschenderweise festgestellt, daß die außerordentlich einfach zugänglichen Umsetzungsprodukte von eben solchen nachwachsenden natürlichen Fetten, bzw. Ölen, vorzugsweise von flüssigen Fettsäureglyceriden, die durch Erhitzung dieser Öle mit Polyalkylenpolyaminen, gegebenenfalls in Gegenwart von Wasser in Form vorzugsweise bei Raumtemperatur flüssiger Reaktionsgemische anfallen, ohne weitere Reinigungs- oder Trennoperationen direkt oder im Gemisch mit weiteren Zusatzstoffen als Ausgangsmaterial für die Herstellung von Polyurethanen, bzw. Polyurethanschaumstoffen eingesetzt werden können.

Auf diese Weise können überraschenderweise, nach ansonsten üblichen Verfahren, Schaumstoffe erhalten werden, die zu über 65 Gew.-% aus sogenannten natürlichen, d.h. nachwachsenden Rohstoffen bestehen.

In diesem Zusammenhang ist auch von Interesse, daß im erfindungsgemäßen Verfahren auch noch große Mengen nichtfunktioneller natürlicher und/oder synthetischer Wachse, Fette, Öle, Fettsäureester, Fettsäureamide und sonstiger oligomerer oder telomerer, vorzugsweise unter 100°C schmelzender Kohlenwasserstoffe mit Siedepunkten von vorzugsweise 200°C mitverwendet werden können, ohne daß die erhältlichen Schaumstoffe klebrig werden.

Gegenstand der Erfindung ist ein Verfahren zur Herstellung von gegebenenfalls zellförmigen Polyurethanen und/oder Polyharnstoffen durch Umsetzung von
a) Polyisocyanaten mit
b) Reaktionsprodukten von Polyalkylenpolyaminen und gegebenenfalls Wasser mit natürlichen und/oder synthetischen gegenüber Isocyanaten nichtfunktionellen Ölen, Fetten Wachsen, Fettsäure estern, Fettsäureamiden oder sonstigen oligomeren oder telomeren Kohlenwasserstoffen und gegebenenfalls
c) Fettsäuren mit mehr als 8 C-Atomen sowie gegebenenfalls
d) mindestens zwei gegenüber Isocyanaten aktive Wasserstoffatome aufweisenden Verbindungen vom Molekulargewicht 62 bis 10.000, gegebenenfalls in Gegenwart von
e) an sich bekannten Treibmitteln, Katalysatoren und weiteren Hilfs- und Zusatzmitteln.

Erfindungsgemäß werden
- als Amine Polyalkylenpolyamine eingesetzt.

Es ist bevorzugt, daß
- als Polyalkylenpolyamine Polyethylenpolyamine mit mehr als 2 N-Atomen eingesetzt werden,
- den Reaktionsprodukten b) vor der Umsetzung noch weitere Amine und/oder Fettsäuren c) und/oder Kohlenwasserstoffe zugesetzt werden,
- als Kohlenwasserstoffe Paraffine und/oder Oligomerisate bzw. Telomerisate von Kohlenwasserstoffmonomeren verwendet werden.

Die Erfindung betrifft auch Polyurethane und/oder Polyharnstoffe sowie Polyurethan- und/oder Polyharnstoff-Schaumstoffe, erhältlich nach dem erfindungsgemäßen Verfahren.

Die neuen erfindungsgemäßen Reaktionsprodukte gemäß b) sind dünnflüssig, so daß gut verarbeitbare Gemische von Salzen, funktionellen und nichtfunktionellen Komponenten und den Polyisocyanaten entstehen können, andererseits durch den gegebenenfalls hohen Anteil wenig polarer Komponenten hoch hydrophobe aber wenig weichgemachte PU-Werkstoffe erzeugt werden können - eine als überraschend zu bezeichnende Eigenschaltskombination.

Weiterhin war es überraschend, daß sich die nichtfunktionellen Fettsäureester, die immerhin über eine gewisse Polarität verfügen, auch ganz oder teilweise durch Kohlenwasserstoffe, bzw. oligomere Polyolefine substituieren lassen.

Ferner war es auch überraschend, daß die neuartigen Schaumstoffe, trotz ihres gegebenenfalls hohen Gehaltes an dünnflüssigen Ölen, mehr den Charakter von nichtklebenden Hartschäumen als den von Weichschäumen haben, obgleich auch die Erzeugung relativ weicher, aber nicht klebrig wirkender Schaumstoffe möglich ist.

Es ist ein weiterer technischer Vorteil der neuen Schaumstoffe, daß dann, wenn die verwendeten Öle lufthärtende Gruppierungen enthalten, wie sie bekanntermaßen in der Lackindustrie Verwendung finden, gegebenenfalls bei Mitverwendung von Sikkativen, Produkte erhalten werden können, bei denen die eingelagerten Öle noch durch eine Luftreaktion chemisch vernetzbar sind.

Im folgenden werden die für das erfindungsgemäße Verfahren verwendeten Komponenten näher erläutert:

Als Polyisocyanat a) kommen im Prinzip beliebige, vorzugsweise jedoch bei Raumtemperatur flüssige aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise solcher Formel

Q(NCO)ₙ,

in der
- n: 2 bis 4, vorzugsweise 2 und 3, und
- Q: einen aliphatischen Kohlenwasserstoffrest mit 2 bis 18, vorzugsweise 6 bis 10 C-Atomen, einen cycloaliphatischen Kohlenwasserstoffrest mit 4 bis 15, vorzugsweise 5 bis 10 C-Atomen, einen aromatischen Kohlenwasserstoffrest mit 6 bis 15, vorzugsweise 6 bis 13 C-Atomen oder einen araliphatischen Kohlenwasserstoffrest mit 8 bis 15, vorzugsweise 8 bis 13 C-Atomen bedeuten,
z.B. solche Polyisocyanate, wie sie in der DE-OS 2 832 253, Seiten 10 bis 11, beschrieben werden.

Vorzugsweise werden aromatische Polyisocyanate eingesetzt.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenylpolymethylenpolyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifiziertes Polyisocyanat"), insbesondere solche modifizierten Polyisocyanate, die sich vom 2,4- und/oder 2,6-Toluylendiisocyanat bzw. vom 4,4'-und/oder 2,4'-Diphenylmethandiisocyanat ableiten.

Die Polyisocyanate werden in, bezogen auf die im Reaktionsgemisch enthaltenen OH-Gruppen, 60-150 %iger, vorzugsweise 80-120 %iger stöchiometrischer Menge eingesetzt.

Zur Komponente b): Als Amine, die den Reaktionsprodukten b) von der Umsetzung noch zugesetzt werden können, kommen z.B. in Frage:
- Alkanolamine, bevorzugt Alkoxylierungsprodukte von Ammoniak und/oder Ethylendiamin, bzw. Polyalkylenpolyaminen zur Anwendung, obgleich auch andere Alkanolamine, z.B. auf Basis von Hexamethylendiamin, von Piperazinen, sowie Toluylendiamin oder Diaminodiphenylmethan in Betracht kommen. Als Alkylenoxide werden bevorzugtermaßen Propylenoxid und/oder Ethylenoxid verwendet. Von besonderem Interesse sind hier Diethanolamin und insbesondere Triethanolamin bzw. Di-, Tri- und Tetraethoxy- bzw. Tetrapropoxy-ethylen-diamin. Es kommen auch gemischt alkoxylierte Produkte in Betracht, bzw. auch solche, bei denen pro NH-Gruppierung mehr als 1 Mol Alkylenoxid angelagert worden ist, Polyamine, außer Ethylen oder Propylendiamin.

Als Polyalkylenpolyamine kommen in Frage :
- Polyethylenpolyamine mit mehr als 2 N-Atomen, etwa Diethylentriamin, Triethylentetramin. Tetraethylenpentamin, Pentaethylenhexamin, bzw. solche Polyamine enthaltende Gemische. wie sie beispielsweise bei der Ethylendiaminsynthese anfallen können.

Die Polyalkylenpolyamine werden, gegebenenfalls in Verbindung mit Wasser, in solchen stöchiometrischen Mengen zur Umsetzung mit den Fettsäureestern eingesetzt, daß pro Aminogruppe mindestens eine. vorzugsweise mindestens zwei Estergruppen zur Verfügung stehen.

Für den Fall der Mitverwendung von Wasser, wird dieses in maximal solchen Mengen eingesetzt, daß pro Aminogruppe im Reaktionsgemisch zwei, vorzugsweise 0,1 bis 1 Mol Wasser zur Verfügung stehen. Höhere Wassermengen sind zwar in Betracht zu ziehen, führen jedoch oftmals zu unerwünscht weitgehenden Verseifungsreaktionen.

Als mit den Polyalkylenpolyaminen umzusetzende, synthetische, vorzugsweise natürliche Fettsäureester oder Gemische von Fettsäureestern, kommen vorwiegend die sogenannten Speiseöle in Betracht, z.B. Sonnenblumenöle, Sojaöle, Palmöle, Olivenöle, Raps-, bzw. Rüböle, Distelöle, Leinöle, Nuß- und Wurzelöle, Tran- und Fischöle, Kernöle, Fruchtöle, Holzöle aber auch sonstige Fette, Öle oder Wachse, Montanwachse und -Öle mit Esterstruktur, etwa Leinöle, Keimöle, Schweine-, Rinder, Knochenfette, Pflanzen- und Insektenwachse, Tallöle, vorzugsweise finden Sojaöl, Rapsöl und Tallöl, sowie gemischte, speisefähige Öle, in gehärteter, vorzugsweise natürlicher Form, Verwendung.

Die Umsetzung der Polyalkylenpolyamine mit den vorzugsweise natürlichen Ölen und gegebenenfalls Wasser erfolgt durch Verrühren. bzw. Verkochen der Komponenten bei 50 bis 300°C, vorzugsweise 100 bis 220°C, gegebenenfalls im Druckgefäß und unter Stickstoff, bzw. sauerstoffreier Atmosphäre. Die so nach ca. 1 bis 10 Stunden. vorwiegend 2 bis 4 Stunden, Reaktionszeit erhältlichen Reaktionsprodukte sind vielfach hellfarbig und homogen, bzw. stellen gegebenenfalls auch Dispersionen dar. Sie können gegebenenfalls nach Abkühlung direkt für die Umsetzung mit den Polyisocyanaten eingesetzt werden.

Die den Reaktionsprodukten gemäß b) gegebenenfalls noch hinzu zu fügenden weiteren Amine und Fettsäuren c) dienen der Aktivitätsregulierung und können nach Maßgabe der gewünschten Verfahrensparameter variiert werden. Im allgemeinen werden sie dem Reaktionsprodukt b) gemäß a) in Mengen unter 30 Gew.-%, vorzugsweise unter 15 Gew.-%, hinzugefügt.

Die Fettsäuren c) werden dem Reaktionsprodukt b) im allgemeinen in Mengen unter 50 Gew.-%, vorzugsweise unter 25 Gew.-%, beigefügt.

Ihre Mitverwendung scheint die entstehenden Schaumstoffe im Hinblick auf Stabilität und niedriges Raumgewicht positiv zu beeinflussen, deshalb ist ihr Zusatz, insbesondere in Form von Ölsäure in den Schaumstoffrezepturen unerwarteterweise vielfach empfehlenswert.

In Betracht kommen hier Fettsäuren, bzw. Fettsäuregemische. Die Fettsäuren sind gesättigte und/oder vorwiegend ungesättigte Monocarbonsäuren mit mehr als 8 C-Atomen. Es kommen jedoch auch Di- und Polycarbonsäuren in Betracht, z.B. die durch Oligomerisierung erhältlichen, sogenannten Dimer- und Trimersäuren der Fettchemie.

Die Carbonsäuren können synthetischen Ursprungs sein. wie z.B. solche, die durch Umsetzung von Aminen oder Alkoholen mit Di- oder Polycarbonsäuren, bzw. deren Anhydriden oder Verseifung von Nitrilen, Amiden, (Poly)Estern oder durch Oxydation oder Ozonabbau von gegebenenfalls ungesättigt Gruppen enthaltenden Polyolefinen, z.B. Butylkautschuken oder von Fettalkoholen zugänglich sind.

Sie sind jedoch vorwiegend natürlichen Ursprungs und vielfach Fettsäuregemische, beispielsweise kommen in Betracht: Ölsäure, Eleidinsäure, Stearinsäure, Isostearinsäure, Tallölfettsäure, Rapsfettsäure, Kokosfettsäure, Abietin- und sonstige Harzsäuren, Erukasäure, Rizinusölfettsäuren, Fischöl- und Tranölfettsäuren, Linol-, Linolensäure, Talk-, Kokosfettsäuren, Montanwachsfettsäuren, Schieferölfettsäuren, usw.

Vorzugsweise werden solche Fettsäuren, bzw. Fettsäuregemische - ganz, teilweise oder vorzugsweise nicht gehärtet - verwendet. die bei Raumtemperatur flüssig sind.

Als gegebenenfalls mitzuverwendende Kohlenwasserstoffe werden vorzugsweise solche mit Erstarrungspunkten unter 100°C und/oder Siedepunkten über 200°C verwendet.

Sie sind in der mit den Polyisocyanaten umzusetzenden Reaktionsmischung in Mengen von unter 85 %, vorzugsweise zwischen 0 und 70 Gew.-%, enthalten und verfügen vorzugsweise nicht über mit Isocyanaten reaktive Gruppen.

Sie können bereits bei der Umsetzung gemäß a) im Reaktionsgemisch, gegebenenfalls als Verdünnungsmittel, anwesend sein.

Es können z.B. Fraktionen aus der Kohleveredelung oder Erdölraffination oder aus Recyclingprozessen sein, z.B. Kerosine, Paraffinöle, Paraffinwachse, Spindelöle, Leicht- und Schweröle, Teere, Bitumina mit gesättigtem, ungesättigtem, aliphatischem, araliphatischem, cyclischem oder aromatischem Charakter.

Es kann sich aber auch um durch Polymerisation, Oligomerisation, Telomerisation ungesättigter Grundkomponenten, etwa Ethylen, Propylen, Buten, Isobuten, Isobutylen, Penten, Octen zugängliche Öle aber auch z.B. um Silikonöle handeln, wobei flüssige Oligomere des Isobutylens bevorzugt zu nennen sind, weil sie einen besonders günstigen Einfluß auf die Hydrophobie oder Gasdurchlässigkeit der Verfahrensprodukte haben können.

Als unter d) genannte, gegenüber Isocyanaten reaktionsfähige, gegebenenfalls mitzuverwendende Komponenten mit Molgewichten zwischen 62 und 10 000, vorzugsweise zwischen 90 und 5 000, sind bevorzugtermaßen die üblichen, in der Polyurethanchemie verwendeten reinen, gemischten oder gefüllten, neutrale oder basische Gruppen, z.B. Aminogruppen, enthaltenden Polyolkomponenten zu verstehen, vorzugsweise solche, die auf neutralen oder basischen Polyolen, bzw. deren Alkoxylierungsprodukten basieren. Sie haben in der Regel OH-Zahlen über 30, vorzugsweise über 120, insbesondere über 300. d.h. zu ihnen sind auch die niederen Glykole. Triole und Zucker zu rechnen.

Sie sind im mit den Polyisocyanaten umzusetzenden Reaktionsgemisch in Mengen von 0 bis 50, vorzugsweise 0 bis 35. Gew.-% enthalten.

Als technik-übliche Zusatzstoffe e) sind insbesondere zu nennen:
Schaumstabilisatoren, Aktivatoren für die Isocyanatumsetzung, Wasser und/oder flüchtige Treibmittel, z.B. Kohlenwasserstoffe wie Cyclopentan oder FCKW, FKW und ihre sonstigen Ersatzstoffe, Füllstoffe auf organischer oder anorganischer Basis, Flammschutzmittelzusätze, Verstärkungsfasern, Farbgeber, Konservierungsmittel, Alterungsschutzmittel, Oxydationsschutzmittel, Biocide, Aromastoffe, innere Trennmittel, Sikkative usw.

Die erfindungsgemäß zugänglichen neuen Schaumstofe können weitgehend mit vorteilhaft preiswerten, technisch leicht zugänglichen, vorwiegend natürlich nachwachsenden Gerüstrohstoffen, zu denen erfindungsgemäß auch die zu verwendenden Fettsäuren zu zählen sind, aufgebaut werden. Sie haben vorwiegend Hartschaumcharakter, können jedoch auch halbharten oder sogar weichen Charakter haben. Je nach der Art der erfindungsgemäß einzusetzenden natürlichen Öle und nichtfunktionellen Komponenten und deren Einsatzmenge sind sie weitgehend geschlossen - aber auch offenporig, hydrophob und z.T. wenig gasdurchlässig und wenig Wasser-aufnehmend oder infolge poröser Zellwände. wasserdurchlässig. Vielfach zeichnen sie sich durch besonders gute Entformbarkeit aus.

Sie finden Verwendung zum Herstellen von Formteilen. zum Ausfüllen von Hohlräumen, als thermisches und elektrisches und schallabsorbierendes Isoliermaterial, als Verpackungs- und Polstermaterial mit guter Stoßenergieaufnahmefähigkeit, zur Herstellung von Sandwichkonstruktionen, als Konstruktionsmaterial, bzw. zur Herstellung sogenannter Integralschaumformkörper. In zerkleinerter oder offenporiger Form können sie auch für die Adsorption von Gerüchen und hydrophilen oder hydrophoben Flüssigkeiten oder als Filtermaterial verwendet werden.

Die Herstellung der erfindungsgemäßen Polyurethane/Polyharnstoffe vorzugsweise der Schaumstoffe, erfolgt nach den bekannten Verfahren der Technik, durch Vermischen der Polyisocyanate mit den erfindungsgemäß einzusetzenden, vorzugsweise bei Raumtemperatur vorliegenden, gegebenenfalls aber auch erwärmten, Reaktionsgemische und den gegebenenfalls mitzuverwendenden, weiteien Verfährenskomponenten.

Letztere können als Vormischungen vorliegen oder einzeln dosiert werden.

Das erfindungsgemäße Verfahren kann gemäß dem Stande der Technik, batchweise oder kontinuierlich erfolgen, in offenen oder geschlossenen Formen oder zB. nach dem Doppeltransportbandverfahren vorgenommen werden.

Im folgenden soll der Gegenstand der Erfindung beispielhaft erläutert werden. Die angegebenen Teile und Prozente beziehen sich auf das Gewicht, soweit nichts anderes vermerkt ist.

### Beispiele

Es wurden folgende gemäß a) zu verwendende durch Umsetzung von Alkanolaminen, bzw. Polyaminen mit natürlichen Ölen und/oder Fetten erhältliche Reaktionsgemische hergestellt, bzw. verwendet:

### RA:

1 000 Teile handelsübliches Speiseöl auf pflanzlicher Basis werden mit 300 Teilen eines technischen Polyethylenpolyamingemisches, bestehend aus 40 Teilen Triethylentetramin, 30 Teilen Tetraethylenpentamin und 30 Teilen höherer Polyethylenpolyamine etwa 3 Stunden bei 200°C unter Stickstoff gerührt. Dann läßt man abkühlen. Die OH-Zahl des Reaktionsgemisches beträgt 269.

### RB:

Wie RA, nur wird an Stelle von Speiseöl jetzt handelsübliches Rapsöl eingesetzt. Die OH-Zahl des Reaktionsgemisches beträgt 270.

### RD:

Wie RB aber unter Zusatz von 1 300 Teilen Isobutylen-Oligomerisat mit einem Molgewicht von ca. 2 000 (Oppanol B3: BASF). Die OH-Zahl beträgt 136.

### RH:

2 000 Teile Rapsöl werden mit 200 Teilen des bei RA verwendeten Polyamins und 90 Teilen Wasser 7 Stunden bei 200°C im Druckreaktor gerührt. Dann läßt man abkühlen.

### RI:

1 500 Teile Rapsöl und 1 500 Teile Sojaöl werden mit 390 Teilen des bei RA verwendeten Polyamins im Druckkessel unter Stickstoff 3 Stunden auf 200°C unter Rühren erhitzt. Dann wird abgekühlt. Man erhält ein schwach gelbes, bei Raumtemperatur flüssiges Reaktionsgemisch, das direkt für die Schaumstoffherstellung eingesetzt werden kann. Die OH-Zahl beträgt ca. 106.

### Beispiel 1

Man stellt eine Mischung her aus 100 Teilen RA, 75 Teilen Ölsäure, 100 Teilen Rapsöl, 30 Teilen Cyclopentan, 13 Teilen Wasser, 2 Teilen eines handelsüblichen Stabilisators auf Basis von Polyetherpolysiloxanen. und verrührt diese Mischung etwa 5 Sek. intensiv mit 150 Teilen eines handelsüblichen technischen MDI-Typs (Desmodur® 44 V 20, Bayer AG). Dann gießt man das Reaktionsgemisch in eine Kastenform, in der es innerhalb weniger Sekunden zu einem homogen-feinporigen. trockenen Schaumstoff mit dem Charakter eines relativ tlexiblen Hartschaums aufschäumt. Das Raumgewicht beträgt ca. 30 g/l. Der Schaum läßt sich durch Einpressen, z.B. von technischen Kleinteilen der Ampullen verformen und dient als Verpackungsmaterial für derartige Formteile. Er enthält ca. 55 % nachwachsender Rohstoffe.

### Beispiel 2

Wie Beispiel 1, nur werden statt Ölsäure 175 Teile Tallölfettsäure, sowie außerdem 16 Teile Wasser und 171 Teile MDI verwendet. Man erhält einen etwa gleichartigen Schaumstoff, der als Verpackungs- oder Isoliermaterial verwendet werden kann.

### Beispiel 3

Wie Beispiel 2, nur wird an Stelle von RA jetzt in gleicher Menge RB eingesetzt. Der erhaltene Schaumstoff entspricht dem nach Beispiel 2 erhaltenen.

### Beispiel 4

100 Teile RB werden mit 180 Teilen Sojaölfettsäure, 50 Teilen Rapsöl, 150 Teilen Polyisobutylen-Oligomerisat (Oppanol B3, BASF). 30 Teilen Cyclopentan, 16 Teilen Wasser und 5 Teilen des Stabilisators aus Beispiel 1 verrührt und dann intensiv mit 172 Teilen des in Beispiel 1 verwendeten MDI-Typs vermischt. Dann gibt man das sich erwärmende Reaktionsgemisch in eine Kastenform, in der es zu einem feinporigen, stabilen, trockenen Schaumstoff mit Hartschaumcharakter aufsteigt. Sein Raumgewicht beträgt ca. 23 g/l. Der Schaumstoff ist hydrophob und gut als thermisches Isoliermaterial verwendbar. Er läßt sich auch nach dem Doppeltransportband-Verfahren zu Isolationsplatten mit Papier-Deckschichten verarbeiten.

### Beispiel 5

200 Teile RD; 175 Teile Ölsäure; 100 Teile Rapsöl; 30 Teile Cyclopentan; 16 Teile Wasser, 5 Teile Schaumstabilisator aus Beispiel 1 werden verrührt und dann intensiv mit 175 Teilen Polyisocyanat aus Beispiel 1 vermischt. Die aufschäumende Mischung wird in eine Kastenform gegeben und schäumt zu einem feinporigen, stabilen Hartschaum mit einem Raumgewicht von ca. 25 g/l auf. Das Material wird zu Isolations- und Verpackungszwecken verwendet.

### Beispiel 6

100 Teile RI werden verrührt mit 3 Teilen Wasser, 2 Teilen Schaumstabilisator und 12 Teilen Cyclopentan. Dann vermischt man intensiv mit 50 Teilen techn. hDI (Desmodur 44 V 20) und gießt in eine Kastenform, in der das Reaktionsgemisch zu einem halbharten Schaum mit feiner Porenstruktur und einem Raumgewicht von ca. 40 g/l aufschäumt.

### Beispiel 7

1500 Teile Rapsöl werden mit 390 Teilen des bei RA verwendeten Polyethylenpolyamin-Gemisches bei 200°C unter N₂ 3 Stunden gut gerührt. Dann läßt man abkühlen; es bildet sich ein trübes. tließfähiges Reaktionsprodukt.

Davon werden 200 Teile mit 100 Teilen Ölsäure, 4 Teilen eines handelsüblichen Stabilisators auf Polyetherpolysiloxanbasis. sowie 12 Teilen Wasser in einer Becherform gut verrührt. Dann werden unter guter Durchmischung 280 Teile des in Beispiel 1 verwendeten Polyisocyanates schnell hinzu gesetzt. Das Reaktionsgemisch wird in eine Kastenform überführt und schäumt dort zu einem zäh-harten feinporigen Schaum mit einem Raumgewicht von ca. 27 g/l auf. Der Schaumstoff kann als Sandwichkern, als Isolier- und Verpackungsmittel dienen.

## Patentansprüche

1. Verfahren zur Herstellung von gegebenenfalls zellförmigen Polyurethanen und/oder Polyharnstoffen durch Umsetzung von
a) Polyisocyanaten mit
b) Reaktionsprodukten von Polyalkylenpolyaminen und gegebenenfalls Wasser mit natürlichen und/oder synthetischen, gegenüber Isocyanaten nichtfunktionellen Ölen, Fetten, Wachsen, Fettsäureestern, Fettsäureamiden oder sonstigen oligomeren oder telomeren Kohlenwasserstoffen und gegebenenfalls
c) Fettsäuren mit mehr als 8 C-Atomen sowie gegebenenfalls
d) mindestens zwei gegenüber Isocyanaten aktive Wasserstoffatome aufweisenden Verbindungen vom Molekulargewicht 62 bis 10 000, gegebenenfalls in Gegenwart von
e) an sich bekannten Treibmitteln, Katalysatoren und weiteren Hilfs- und Zusatzmitteln,
wobei den Reaktionsprodukten b) vor der Umsetzung noch weitere Amine und/oder Fettsäuren c) und/oder Kohlenwasserstoffe zugesetzt werden können.

2. Verfahren zur Herstellung von gegebenenfalls zellförmigen Polyurethanen und/oder Polyharnstoffen durch Umsetzung von
a) Polyisocyanaten mit
b) Reaktionsprodukten von Polyalkylenpolyaminen und gegebenenfalls Wasser mit vorzugsweise natürlichen, gegenüber Isocyanaten nichtfunktionellen Ölen und Fetten und gegebenenfalls
c) Fettsäuren mit mehr als 8 C-Atomen sowie gegebenenfalls
d) mindestens zwei gegenüber Isocyanaten aktive Wasserstoffatome aufweisenden Verbindungen vom Molekulargewicht 62 bis 10 000, gegebenenfalls in Gegenwart von
e) an sich bekannten Treibmitteln, Katalysatoren und weiteren Hilfs- und Zusatzmitteln.

3. Verfahren gemäß Anspruch 1 oder 2, dadurch gekennzeichnet, daß als Polyalkylenpolyamine Polyethylenpolyamine mit mehr als 2 N-Atomen eingesetzt werden.

4. Polyurethane und/oder Polyharnstoffe, erhältlich nach dem Verfahren gemäß Ansprüchen 1 bis 3.

5. Polyurethan- und/oder Polyharnstoffe-Schaumstoffe, erhältlich nach dem Verfahren gemäß Ansprüchen 1 bis 3.

## Claims

1. A method of producing polyurethanes and/or polyureas, which are optionally cellular, by the reaction of
a) polyisocyanates with
b) reaction products of polyalkylene polyamines and optionally water with natural and/or synthetic oils, fats, waxes, esters of fatty acids, amides of fatty acids or other oligomeric or telomeric hydrocarbons which are non-functional in relation to isocyanates, and optionally with
c) fatty acids having more than 8 C atoms, and optionally with
d) compounds of molecular weight 62 to 10,000 having at least two hydrogen atoms which are active in relation to isocyanates, optionally in the presence of
e) foaming agents, catalysts and other adjuvant substances and additives known in the art,
wherein other amines and/or fatty acids c) and/or hydrocarbons can be added to reaction products b) before the reaction.

2. A method of producing polyurethanes and/or polyureas, which are optionally cellular, by the reaction of
a) polyisocyanates with
b) reaction products of polyalkylene polyamines and optionally water with oils and fats which are non-functional in relation to isocyanates and which are preferably natural, and optionally with
c) fatty acids having more than 8 C atoms, and optionally with
d) compounds of molecular weight 62 to 10,000 having at least two hydrogen atoms which are active in relation to isocyanates, optionally in the presence of
e) foaming agents, catalysts and other adjuvant substances and additives known in the art.

3. A method according to claims 1 or 2, characterised in that polyethylene polyamines having more than two N atoms are used as the polyalkylene polyamines.

4. Polyurethanes and/or polyureas, obtainable by the method according to claims 1 to 3.

5. Polyurethane and/or polyurea foamed materials, obtainable by the method according to claims 1 to 3.

## Revendications

1. Procédé de préparation de polyuréthannes et/ou polyurées éventuellement cellulaires, par réaction :
a) de polyisocyanates, avec
b) les produits de réaction de polyalcoylènepolyamines et facultativement, d'eau avec des huiles, graisses, cires, esters d'acides gras, amides d'acides gras naturels et/ou synthétiques, non fonctionnels vis-à-vis des isocyanates ou d'autres hydrocarbures oligomériques ou télomériques, et facultativement,
c) des acides gras ayant plus de 8 atomes C, ainsi que facultativement,
d) des composés présentant au moins deux atomes d'hydrogène actifs vis-à-vis des isocyanates, de poids moléculaires compris dans l'intervalle allant de 62 à 10 000, facultativement en présence de
e) porogènes, catalyseurs connus et autres adjuvants et additifs,
où l'on peut ajouter aux produits de réaction b), avant la réaction, encore d'autres amines et/ou acides gras c) et/ou hydrocarbures.

2. Procédé de préparation de polyuréthannes et/ou polyurées éventuellement cellulaires, par réaction :
a) de polyisocyanates, avec
b) les produits de réaction de polyalcoylènepolyamines et facultativement, d'eau avec des huiles et graisses de préférence naturelles, non fonctionnelles vis-à-vis des isocyanates, et facultativement,
c) des acides gras ayant plus de 8 atomes C, ainsi que facultativement,
d) des composés présentant au moins deux atomes d'hydrogène actifs vis-à-vis des isocyanates, de poids moléculaires compris dans l'intervalle allant de 62 à 10 000, facultativement en présence de
e) porogènes, catalyseurs connus et autres adjuvants et additifs

3. Procédé suivant la revendication 1 ou 2, caractérisé en ce que l'on met en oeuvre comme polyalcoylènepolyamine, une polyéthylènepolyamine avec plus de 2 atomes N.

4. Polyuréthanne et/ou polyurée, pouvant être obtenu par le procédé suivant les revendications 1 à 3.

5. Mousse polyuréthanne et/ou polyurée, pouvant être obtenue par le procédé suivant les revendications 1 à 3.
